(19) Europäisches Patentamt
European Patent Office
Office européen des brevets

(11) **EP 3 554 083 A1**

(12) **EUROPEAN PATENT APPLICATION**

(43) Date of publication:
**16.10.2019 Bulletin 2019/42**

(21) Application number: **18305441.0**

(22) Date of filing: **11.04.2018**

(51) Int Cl.:
*H04N 19/597* (2014.01)     *G06T 17/10* (2006.01)
*H04N 19/70* (2014.01)      *H04N 19/46* (2014.01)
*H04N 19/90* (2014.01)      *H04N 13/275* (2018.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, Delaware 19809 (US)**

(72) Inventors:
• **RICARD, Julien**
  **35576 Cesson-Sévigné (FR)**
• **OLIVIER, Yannick**
  **35576 Cesson-Sévigné (FR)**
• **LLACH PINSACH, Joan**
  **35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54) **A METHOD AND APPARATUS FOR ENCODING AND DECODING METADATA ASSOCIATED WITH PATCHED PROJECTION OF POINT CLOUDS**

(57)     Methods and devices are provided to encode and decode, in and from a stream, metadata associated with a projection of a three-dimensional point cloud onto a patched map. These metadata are a per-patch metadata comprising coordinates and size of each patch of the patched map; a first per-block metadata indicating, for each block of the patched map, whether the block belongs to a patch and, if so, an index of the patch in the per-patch metadata; and an occupancy map indicating, for each pixel of the patched map, whether the pixel encodes a point of the three-dimensional point cloud. An advantage of this method is to only encode in the bitstream the prediction residual of the blocks where such prediction is not accurate. This technique reduces the bitrate of the resulting stream. The per-block metadata is lossless retrieved at the decoder ensuring the same visual quality.

Figure 6

**Description**

**1. Technical Field**

The present principles generally relate to encoding and decoding a three-dimensional point cloud in a data stream, for instance a colored point cloud or a dynamic colored point cloud. Particularly, but not exclusively, the technical field of the present principles is related to encoding in and decoding from, a data stream, metadata associated with a projection of a three-dimensional point cloud onto a patched depth map.

**2. Background**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A three-dimensional point cloud is a set of points located in a three-dimensional (3D) space, each point being defined by a position in the 3D space and, in case of colored point clouds, a color. An image is a 2D representation of the scene; a point cloud is a 3D representation of a scene. Point clouds may be static or dynamic depending on whether the point cloud evolves with respect to time. It should be noticed that in case of dynamic point clouds, the number of points may not be constant; generally, this number evolves over time. A dynamic point cloud is thus a time-ordered list of sets of points.

Multiple methods exist to encode and decode 3D point clouds. Image-based point cloud encoding is a category of methods based on the projection of the points of the 3D point cloud onto pixels of two-dimensional (2D) images. Image-based point cloud encoding techniques combine compression efficiency and low complexity. They proceed in two main steps. 3D information (spatial coordinates and color of each point) is projected onto 2D images (one for geometry, one for texture). Then, the projection images are encoded with 2D video encoders. Good compression performance is achieved by leveraging the performance of 2D video encoder, like HEVC, while, at the same time, the process complexity is kept low by using simple projection schemes.

Performing such a projection for every point clouds of a sequence results in a video, which can be encoded with existing video codecs (e.g. HEVC). In order to allow the decoder to reconstruct the point clouds (i.e. de-project from 2D to 3D space), additional information associated with each point cloud of the sequence is embedded in the stream as metadata. The encoding of the metadata associated with projections of a point cloud may require an important bit rate. There is a need for a method ensuring a good compression efficiency for such metadata.

**3. Summary**

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate a method of encoding, in a stream, metadata associated with a projection of a three-dimensional point cloud onto a patched map. The method comprising:

- obtaining:

    • a per-patch metadata comprising coordinates and size of each patch of the patched map;
    • a first per-block metadata indicating, for each NxN block of the patched map, whether said block belongs to a patch and, if so, an index of said patch in the per-patch metadata; and
    • an occupancy map indicating, for each pixel of the patched map, whether the pixel encodes a point of the three-dimensional point cloud;

- encoding the per-patch metadata in the stream;
- for each data of the first per-block metadata:

    • adding a binary flag in the stream indicating whether the block of the patched map indicated in said data belongs to a patch; and
    • if so, encoding in the stream, values of pixels of the occupancy map corresponding to said block;

- generating a second per-block metadata by labeling pixels of the occupancy map with patch indices and annotating data of said second per-block data as ambiguous when the labeling proposes several patch indices for said data; and
- for each ambiguous data, encoding the patch index comprised in the ambiguous data.

According to a particular characteristic, the occupancy map has a lower resolution than the patched map and a pixel of the occupancy map indicates if a MxM block of the patched map encodes points of the three-dimensional point cloud.

According to a particular characteristic, at least one non-ambiguous data of the second per-block metadata is different from a corresponding data of the first per-block metadata and is annotated as erroneous data. The method further comprises, for each erroneous data:

- adding the index of the block referenced by the erroneous data in the stream; and
- encoding the patch index comprised in the erroneous data in the stream.

According to a particular characteristic, based on bounding boxes of patches as described in the per-patch metadata, a number of candidate patches is computed for each NxN block of the patched map and the encoding of the data of the first per-block metadata is performed only for the blocks having at least one candidate patch.

The present disclosure also relates to an encoder device comprising a memory associated with a processor configured for implementing the above encoding method.

The present disclosure also relates to a method of decoding, from a stream, metadata associated with a projection of a three-dimensional point cloud onto a patched map, the method comprising:

- decoding a per-patch metadata from the stream, a per-patch metadata comprising coordinates and size of each patch of the patched map;
- for each NxN block of the patched depth map:

  • decoding from the stream a binary flag indicating whether the block of the patched map indicated in said data belongs to a patch; and
  • if so, decoding from the stream, values of pixels of an occupancy map corresponding to said block; an occupancy map indicating, for each pixel of the patched map, whether the pixel encodes a point of the three-dimensional point cloud;

- generating a per-block metadata by labeling pixels of the occupancy map with patch indices and annotating data of said per-block data as ambiguous when the labeling proposes several patch indices for said data; and
- for each ambiguous data, decoding the patch index for the ambiguous data from the stream.

According to a particular characteristic, the occupancy map has a lower resolution than the patched map and a pixel of the occupancy map indicates if a MxM block of the patched map encodes points of the three-dimensional point cloud.

According to a particular characteristic, the method further comprises:

- obtaining from the stream a list of pair of indices comprising a block index and a patch index; and
- for each pair of said list, correcting the data of the per-block metadata associated with said block index with said patch index.

According to a particular characteristic, based on bounding boxes of patches as described in the per-patch metadata, a number of candidate patches is computed for each NxN block of the patched map and the decoding of the data of the per-block metadata is performed only for the blocks having at least one candidate patch.

The present disclosure also relates to an decoder device comprising a memory associated with a processor configured for implementing the above decoding method.

## 4. Brief Description of Drawings

The present disclosure will be better understood, and other specific features and advantages will emerge upon reading the following description, the description making reference to the annexed drawings wherein:

- **Figure 1** shows a three-dimensional (3D) model of an object and a points of a point cloud corresponding to 3D model, according to a non-restrictive embodiment of the present principles;

- **Figure 2** shows an overview of a point cloud encoder, according to a non-restrictive embodiment of the present principles;
- **Figure 3** illustrates the data generated by an imaged-based point cloud encoding method, according to a non-restrictive embodiment of the present principles;
- **Figure 4** shows an example architecture of a device which may be configured to implement a method described in relation with figures 5 and/or 6, according to a non-restrictive embodiment of the present principles;
- **Figure 5** illustrates a method for encoding, in a stream, metadata associated with a projection of a three-dimensional point cloud onto a patched map, according to a non-restrictive embodiment of the present principles;
- **Figure 6** illustrates a method for decoding, from a stream, metadata associated with a projection of a three-dimensional point cloud onto a patched map, according to a non-restrictive embodiment of the present principles;

## 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

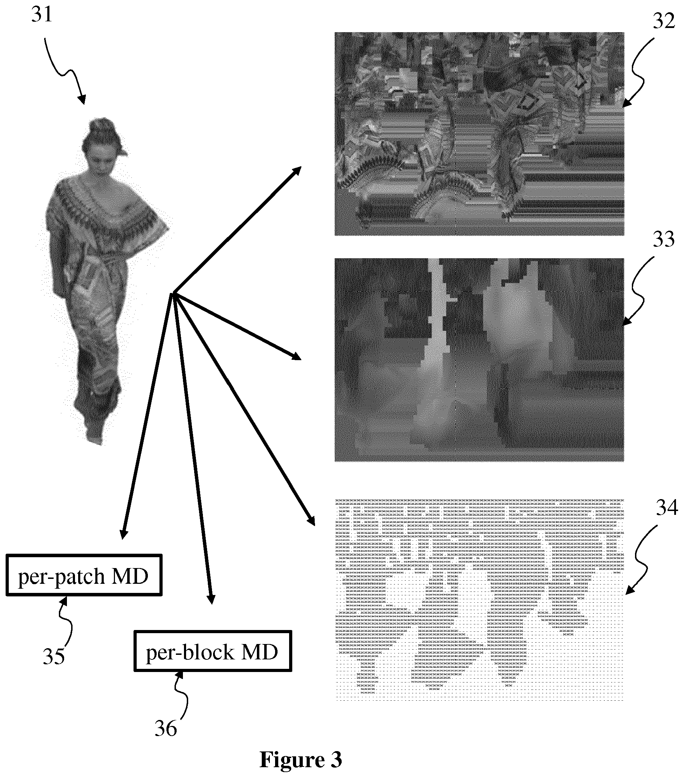

The present principles are described for encoding/decoding a three-dimensional (3D) point cloud or a sequence of three-dimensional point clouds in and from a data stream and, in particular, encoding/decoding the metadata associated with a projection of a three-dimensional point cloud onto a patched depth map and/or onto a color map. The present principles are applicable, for instance, to the Category 2 test model of the MPEG 3DG Ad Hoc on Point Cloud Compression (called TMC2 available on the MPEG web site). Such a method generates a patched depth map as illustrated in Figure 3, and in case of colored point cloud, a patched color map. A patch map is an image in which a plurality of smaller images (obtained by projection of a part of the point cloud) are packed together. As every pixel of such a projection image is not used to encode a point of the projected part of the point cloud, the packing process may make the projection images overlay (for instance, by stretching such projection images). Three types of metadata are required to retrieve the 3D point cloud from this projection on a patched depth map: a per-patch metadata comprising coordinates and size of each patch of the patched depth map and a description of the associated part of the 3D space encompassing the projected points of the patch; a per-block metadata indicating, for each NxN block of the patched depth map, whether the block belongs to a patch and, if so, an index of the patch in the per-patch metadata; and an occupancy map indicating, for each pixel of the patched depth map, whether the pixel encodes a point of the three-dimensional point cloud. For each point cloud of a sequence projected on a patched depth map, these three metadata have to be encoded in the stream in association with the patched depth map.

According to the present principles, it is possible to efficiently encode the metadata associated with a patched map without loss of quality. According to the present principles, instead of encoding the per-block metadata, a labelling process is used to estimate the per-block metadata at the decoder. An advantage of this method is to only encode in the bitstream the prediction residual of the blocks where such prediction is not accurate. This technique reduces the bitrate of the resulting stream. The per-block metadata is lossless retrieved at the decoder ensuring the same visual quality.

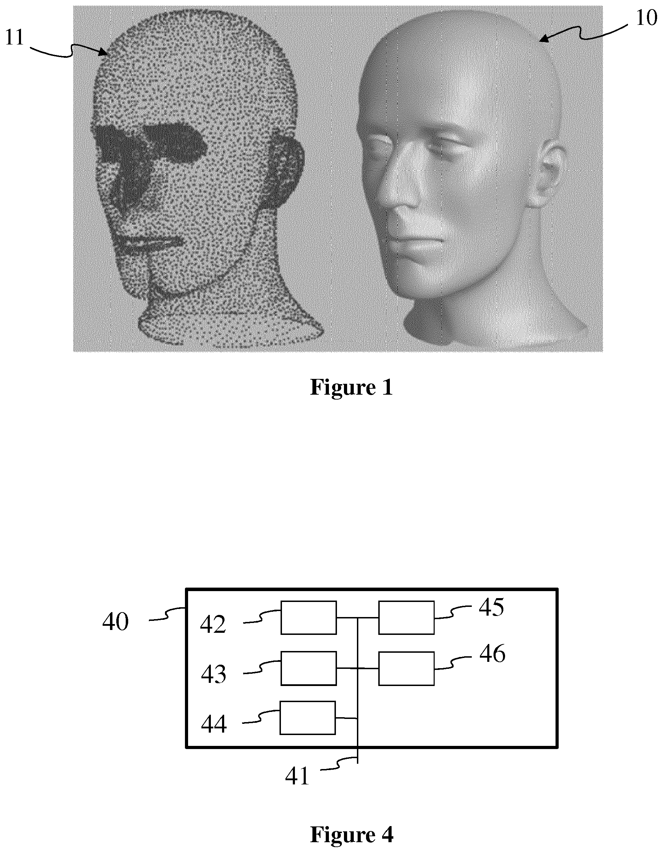

**Figure 1** shows a three-dimensional (3D) model of an object 10 and points of a point cloud 11 corresponding to 3D model 10. Model 10 may be a 3D mesh representation and points of point cloud 11 may be the vertices of the mesh. Points 11 may also points spread on the surface of faces of the mesh. Model 10 may also be represented as a splatted version of point of cloud 11; the surface of model 10 being created by splatting the point of point of cloud 11. Model 10 may be represented by a lot of different representations such as voxels or splines. Figure 1 illustrates the fact that it is always possible to define a point cloud from a surface representation of a 3D object and reciprocally always possible to create a surface representation of a 3D object from a point of cloud.

A point cloud is a set of points, each point being defined by:

- its location in the 3D space, (e.g. in an orthonormal frame of reference, the three coordinates (X, Y, Z) or in a radial frame of reference (p, (p, d));
- its color, (e.g. three-component of a color space (R, G, B) or (Y, U, V));

and possibly other associated attributes, like a normal vector, a specular vector, a transparency, a reflectance vector, etc.

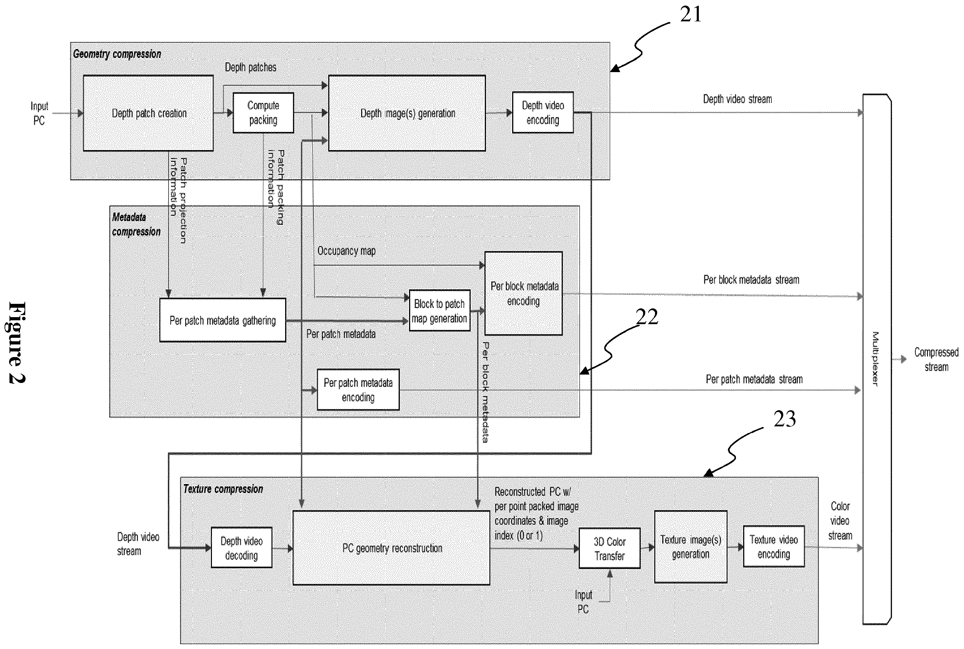

**Figure 2** shows an overview of the TMC2 point cloud encoder. Top row 21 (geometry compression) encodes the geometry information of the point cloud by means of a depth image. Middle row 22 (metadata compression) encodes metadata required to reconstruct the geometry of the original point cloud from the depth image. Bottom row 23 (texture compression) encodes the color information of the reconstructed geometry by means of a color image.

As shown in Figure 2, the compressed point cloud stream comprises four types of information: depth video, color video, per block metadata (comprising an occupancy map) and per patch metadata. The bitrate allocation ratio between these four elements is content dependent: point clouds with complex geometry and smooth texture will result in more bits spent on depth, whereas point clouds with simple geometry and fine texture will result in more bits spent on color. The repartition of bit rate between the four components of the stream (depth video, color video, per patch metadata and per block metadata) depends also on the total bit rate of the stream. Indeed, the amount of per block and per patch metadata is independent of the bitrate of the encoded depth and color videos. At very high-quality settings, most of the bitrate is used by the depth and color streams. At more typical quality settings, however, the relative weight of the metadata streams increases. In other words, at high bitrates, the metadata represents a smaller portion of the total bitrate than at low bitrates. Therefore, it is important to use efficient metadata compression schemas to ensure good compression performance across a wide range of bitrates.

**Figure 3** illustrates the data generated by an imaged-based point cloud encoding method, like TMC2. In a method, the projection of the 3D point cloud 31 onto 2D depth and color images 33 and 32 takes place in two phases. First, the 3D points are clustered in several connected components, where each connected component represents a subset of 3D points of the complete 3D point cloud that have similar normal vectors and are spatial neighbors. Then, each connected component is projected to a surface. The result of the projection is called a patch. A patch contains either the projected color (for color patches) or the projected geometry (for depth patches). In case of colored point cloud, color and depth patches have the same shape, the only difference is the type of information projected.

By packing together all the depth (and color) patches into a 2D image, a patched depth map 33 (and a patched color map 32) is generated. Given that the patches do not occupy the entire patch image, it is necessary to indicate what pixels in that patch image correspond to a projected point: this is done using a binary mask called occupancy map. The occupancy map 34 has the same size (width and height) as the patched depth map 33; the value of the occupancy map at each 2D position indicates whether that position is occupied by a projected point.

In addition, for every occupied pixel in the patch depth map 33, it is necessary to indicate to what patch the pixel belongs, so that the appropriate de-projection information can be accessed. This is done by means of two metadata: a per-patch metadata 35 comprising coordinates and size of each patch of the patched depth map and a description of the associated part of the 3D space encompassing the projected points of the patch; and a per-block metadata 36 indicating, for each NxN block of the patched depth map, whether the block belongs to a patch and, if so, an index of the patch in the per-patch metadata; and an occupancy map indicating, for each pixel of the patched depth map, whether the pixel encodes a point of the three-dimensional point cloud.

Per-patch metadata describes the 2D coordinates and size (U0, V0 deltaSizeU0, deltaSizeV0) of each patch in the patched depth and color maps 33 and 32 and the 3D coordinates in the 3D space of the 3D point cloud 31 (U1, V1, D1). Per-block metadata provides, for each $N \times N$ block of the patched depth and color maps 33 and 32, information that indicates to which patch belongs the current block. The occupancy map indicates which pixels in the current block correspond to projected points.

The per-patch metadata 35 required to de-project each 2D patch to 3D space is relatively small. There are only a few parameters to send per patch (7 in the current version of TCM2) and the number of patches is typically small (hundreds). The occupancy map 34 and per-block metadata 36, however, are required for all pixels of the patched depth and color maps 33 and 32. For example, for a 3D point cloud using 10 bits per spatial coordinate, the size of the patched depth map 33 may be 1280×1280 pixels. An occupancy map 34 and a per-block metadata 36 of the same size represent a large amount of data to encode.

The TMC2 method tries to reduce the size of the coded occupancy map and block to patch metadata by, first, mixing the coding of the occupancy map and the block to patch index metadata and, second, reducing the precision of both, where instead of coding the information for each pixel, it is coded only once per block of NxN pixels. While this technique slightly reduces the coding efficiency of the depth and color patch images (because they are larger than they would otherwise be), this greatly reduces the size of the metadata. For the per-block metadata 36, N may be 16, for instance. This technique reduces the amount of data by a factor of 16 * 16 = 256. For the occupancy map, N may be 1, 2, 4, 8, or 16 for instance; Selecting N=4 reduces the amount of data by a factor of 4 * 4 = 16.

The TMC2 method proposes a stream syntax that encodes the per-block metadata for all blocks of the patched map, then coding the occupancy map for those blocks belonging to a patch.

The per-block metadata defines the index of the patch associated to each block of the depth and color maps, the blocks forming a regular, square grid. The size of the block is given by the "occupancy resolution" parameter in the header of the group of frames, and is, for instance, set to 16 pixels. The occupancy map, which indicates what pixels from the depth and color maps represent a point of the point cloud to be reconstructed, is also coded per block. In this case, the blocks form a grid within each "occupancy resolution" block, the grid being of size "occupancy precision" and is set to 4 pixels for instance.

According to the present principles, instead of encoding the per-block metadata, a labelling process is used to estimate the per-block metadata at the decoder. An advantage of this method is to only encode in the bitstream the prediction residual of the blocks where such prediction is not accurate. This technique reduces the bitrate of the resulting stream. The per-block metadata is lossless retrieved at the decoder ensuring the same visual quality.

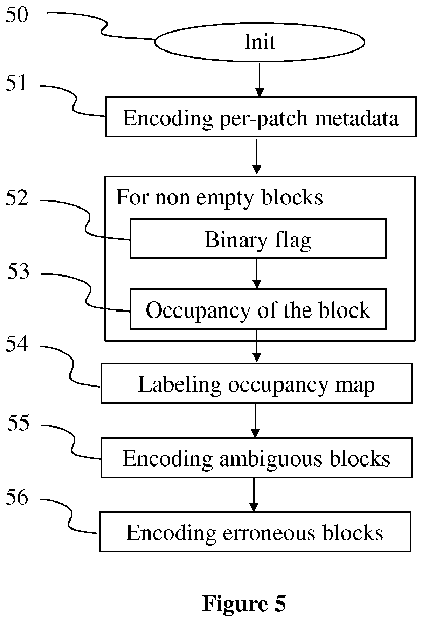

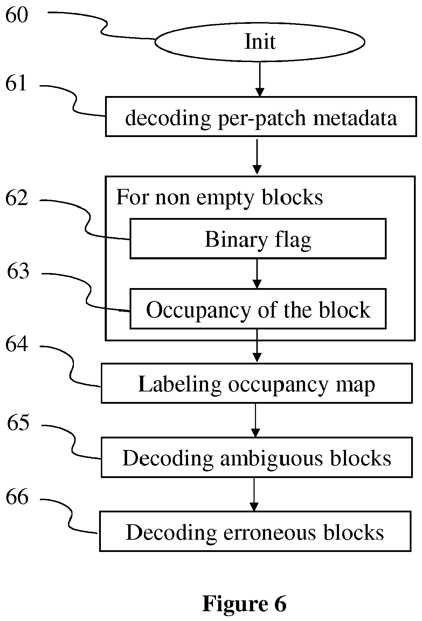

**Figure 4** shows an example architecture of a device 40 which may be configured to implement a method described in relation with figures 5 and/or 6. The device 40 may be configured to be an encoder or a decoder.

The device 40 comprises following elements that are linked together by a data and address bus 41:

- a microprocessor 42 (or CPU), which is, for example, a DSP (or Digital Signal Processor);
- a ROM (or Read Only Memory) 43;
- a RAM (or Random Access Memory) 44;
- a storage interface 45;
- an I/O interface 46 for reception of data to transmit, from an application; and
- a power supply, e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 43 comprises at least a program and parameters. The ROM 43 may store algorithms and instructions to perform techniques in accordance with present principles. When switched on, the CPU 42 uploads the program in the RAM and executes the corresponding instructions.

The RAM 44 comprises, in a register, the program executed by the CPU 42 and uploaded after switch-on of the device 40, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the metadata associated with a projection of a three-dimensional point cloud onto a patched map are obtained from a source. For example, the source belongs to a set comprising:

- a local memory (43 or 44), e.g. a video memory or a RAM (or Random Access Memory), a flash memory, a ROM (or Read Only Memory), a hard disk;
- a storage interface (45), e.g. an interface with a mass storage, a RAM, a flash memory, a ROM, an optical disc or a magnetic support;
- a communication interface (46), e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

In accordance with examples of the decoding or a decoder, the stream is sent to a destination; specifically, the destination belongs to a set comprising:

- a local memory (43 or 44), e.g. a video memory or a RAM, a flash memory, a hard disk;
- a storage interface (45), e.g. an interface with a mass storage, a RAM, a flash memory, a ROM, an optical disc or a magnetic support; and
- a communication interface (46), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface).

In accordance with examples, the device 40 is configured to implement a method described in relation with figure 5 or 6, and belongs to a set comprising:

- a mobile device;
- a communication device;
- a game device;
- a tablet (or tablet computer);
- a laptop;
- a still picture camera;
- a video camera;
- an encoding chip;
- a server (e.g. a broadcast server, a video-on-demand server or a web server).

**Figure 5** illustrates a method for encoding, in a stream, metadata associated with a projection of a three-dimensional point cloud onto a patched map. The method may be implemented in a device 40 (described with regard to figure 4) configured to be an encoder, according to a non-restrictive embodiment of the present principles.

In a step 50, the different parameters of the device 40 are updated. In particular, the metadata to encode are obtained from a source. Three metadata are obtained:

- a per-patch metadata comprising coordinates and size of each patch of the patched map;
- a first per-block metadata indicating, for each NxN block of the patched map, whether the block belongs to a patch and, if so, an index of the patch in the per-patch metadata; and
- an occupancy map indicating, for each pixel of the patched map, whether the pixel encodes a point of the three-dimensional point cloud;

In a step 51, the per-patch metadata is encoded in the stream. A data item of the per-patch metadata comprises at least the coordinates (U0, V0) and the size (deltaSizeU0, deltaSizeV0) of the associated patch in the patched map. It may also comprise other information like an associated part of the 3D space encompassing points of the 3D point cloud that are projected on the associated patch (U1, V1, D1). For example, these seven numeric values are encoded, for each data item of the per-patch metadata, by using any suitable algorithm, for instance, the well-known DecodeUInt32 method parametrized by the bit count of each value to encode.

Steps 52 and 53 are iterated for every data item of the per-block metadata indicating that the corresponding block in the patched map belongs to a patch. A block belongs to a patch if at least a pixel of this block encodes points of the 3D point cloud associated with the patch. In step 52, a binary flag is added to the stream, for example in 1 bit. The bit gets a 0 value if the block belongs to no patch (i.e. corresponding pixels in the occupancy map are all set to 0) and gets a 1 value if the block belongs to a patch. The packing of patches in a patched map ensures that a block belongs to zero or one patch, never more. If the binary flag is set to 1, then, step 53 is performed. Otherwise, the next data of the per-block metadata is encoded the same way up to every data in per-block metadata have been encoded. In step 53, values of pixels of the occupancy map corresponding to the block are encoded in the stream according to any suitable syntax. For example, a binary flag is set to 1 if the block is full (i.e. every occupancy pixels are set to 1). If not values are encoded, for instance, with the equivalent method in TMC2 or any existing efficient method to encode a block of binary pixels. Table 1 summarizes a possible variant of steps 52 and 53.

| For all blocks | |
|---|---|
| Patch flag | encode |
| If Patch flag == 1 | |
| isFull | encode |

| If not Full | |
|---|---|
| bestTraversalOrderIndex | encode |
| runCountMinusTwo | encode |
| Occupancy | encode |
| for (size_t r = 0; r < runCountMinusOne; ++r) | |
| runLength | encode |
| for (size_t j = 0; j <= runLength; ++j) | |
| Block[ `traversalOrder[ i++ ]` ] = occupancy; | encode |
| occupancy = !occupancy; | |
| For all resting block | |
| Block[ `traversalOrder[ i++ ]` ] = occupancy; | |

Table 1

In a variant, a number of candidate patches is calculated for every block. A patch is a candidate for a block if this block belongs to the bounding box of the patch. As the packing of patches which create the patched maps may make the patches overlay each other, a block may have zero, one or more candidate patches. The number of candidate patches is computed according to information stored in the per-patch metadata that comprise the coordinates and the size of every patch of the patched maps. In this variant, steps 52 and 53 are performed only for blocks having at least one candidate. Indeed, the decoder may retrieve the blocks having no candidates only on the basis of the per-patch metadata and so fill the occupancy map with zeros and built the corresponding data in the per-block metadata.

In a step 54, a second per-block metadata is generated by labeling the occupancy map.

The occupancy map is an array of binary pixels indicating whether the corresponding pixel in the patched map encodes a point of the 3D point cloud. The size of the occupancy map depends on the size (WxH) of patched map and on an occupancy precision (occPrec) value:

$$occupancyMapSize = (W / occPrec) \times (H / occPrec)$$

The labeling process allows the generation of a second per-block metadata, only on the basis of the occupancy map. The second per-block metadata comprises a data for each NxN block of the patched map. As these data items are automatically computed only on the basis of the occupancy map, some of the generated data may contain ambiguous information (i.e. a block is indicated as potentially belonging to several patches) and some of non-ambiguous data may be incorrect. Erroneous data are easily detected by comparing the second per-block metadata with the original per-block metadata obtained at step 51, called first per block metadata.

Any suitable labeling process may be used. An example algorithm for the labeling process may be the following one:

- (optional) sort per-patch metadata in ascending order of the size of associated patch
- For each patch P
  // completing a local Label map

  ◦ For all pixel (i,j) of the bounding box of patch P in occupancy map OccMap

    ▪ If OccMap[i,j] = 1

      • If (OccMap[i, j-1]) Label[i,j] = Label[i,j-1];
      • else If (OccMap[i-1,j]) Label[i,j] = Label[i-1,j];
      • else If (OccMap[i-1,j-1]) Label[i,j] = Label[i-1,j-1];
      • else Label[i,j] = new label
      • if (Label[i,j] != Label[i-1,j]) Relabel(i-1, j, Label[i,j])

  ◦ For each connected component within the bounding box of P in Label map

    ▪ If the bounding box of the connected component does not touch the 4 borders of the bounding box of P, remove the connected component from Label map

  ◦ If the bounding box of P in Label map comprises a unique connected component C

    ▪ For each data (i) of the second per-block metadata referencing a block comprising pixels of C

      • If data[i] not set data[i] = {P}
      • Else data[i] is ambiguous

The "Relabel" function update every pixel of the Label map forming a connected component with the pixel in argument with the label of the appealing pixel.

Detection of erroneous data is performed after the labeling process by comparing the second per-block metadata to the original first per-block metadata.

In a step 56, data of the per-block metadata corresponding to ambiguous data of the second per-block metadata are encoded in the stream. Non-ambiguous data are not encoded as the decoder retrieves non-ambiguous data by using the same labeling process. Ambiguous data are encoded so the decoder is able to resolve the ambiguity for these blocks. An index of the patch referenced by data of the per-block metadata (i.e. the true index within the possible ones) is encoded in the stream, for example as an index in the list of possible patch indices provided by the labeling process. In a variant, the patch index is directly encoded. In another variant, a mix of the two variants is implemented as proposed in TMC2.

In an optional step 57, if the second per-block metadata comprise erroneous data, corresponding data in the per-block metadata (i.e. the original one) are encoded in the stream. The encoding of erroneous data comprises the encoding of the index of the concerned block and the encoding of the correct patch index according to any suitable method and syntax.

**Figure 6** illustrates a method for decoding, from a stream, metadata associated with a projection of a three-dimensional point cloud onto a patched map. The method may be implemented in a device 40 (described with regard to figure 4) configured to be an decoder, according to a non-restrictive embodiment of the present principles.

In a step 60, the different parameters of the device 40 are updated. In particular, a stream is obtained from a source. Empty per-block metadata and occupancy map may be created to prepare further steps of the method. The size of these metadata is computed according to the size of the patched map and information obtained from the header of the stream.

In a step 61, per-patch metadata is decoded from the stream. A data item of the per-patch metadata comprises at least the coordinates (U0, V0) and the size (deltaSizeU0, deltaSizeV0) of the associated patch in the patched map.

It may also comprise other information like an associated part of the 3D space encompassing points of the 3D point cloud that are projected on the associated patch (U1, V1, D1).

In a step 62, for all blocks NxN of the patched map, a data is set in the per-block metadata. A binary flag is read from the stream. In a step 63, if the read binary flag is set to zero, the data indicates that the block does not belong to any patch. If the binary flag is set to 1, the NxN values of pixels of the occupancy map corresponding to the block are decoded from the stream and the occupancy map is updated accordingly.

In a variant, the number of candidate patches is first calculated for every block. Data of the per-block metadata corresponding to the blocks with no candidate patch indicate that the block does not belong to any patch and pixels of the occupancy map corresponding to these blocks are set to zero. In this variant, steps 62 and 63 are performed only for NxN blocks having at least one candidate patch.

In a step 64, the built occupancy map is labelled according to the process described in relation to step 51 of the encoding method 50. Data of the per-block metadata are updated by this labeling process. Each of these data indicates if the associated NxN block belongs to a patch. The index from this patch is retrieved according to this labeling process. Some of these data are annotated as ambiguous as the labeling process attributes several patches to the associated block.

In a step 65, for each ambiguous data in the built per-block metadata, a patch index is decoded from the stream and the data is updated to indicate that the associated block belongs to the patch indexed by the decoded patch index.

In an optional step 66, a list of pairs of indices comprising a block index and a patch index is decoded from the stream. This list corresponds to the non-ambiguous data of the per-block metadata for which the labeling process made an error. Data having an associated block corresponding to a decoded block index are updated to indicate that the associated block belongs to the patch indexed by the patch index of the pair.

Naturally, the present disclosure is not limited to the embodiments previously described. In particular, the present disclosure is not limited to methods and devices for encoding/decoding metadata associated with a projection of a three-dimensional point cloud onto a patched map but also extends to image based methods of encoding/decoding a sequence of point clouds in a stream and implemented into any devices implementing these methods and notably any devices comprising at least one CPU and/or at least one GPU.

The present disclosure also relates to a method (and a device configured) for transmitting and/or receiving the stream encoded according to the present principles.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding, in a stream, metadata associated with a projection of a three-dimensional point cloud onto a patched map, the method comprising:

    - obtaining:

        • a per-patch metadata comprising coordinates and size of each patch of the patched map;
        • a first per-block metadata indicating, for each NxN block of the patched map, whether said block belongs to a patch and, if so, an index of said patch in the per-patch metadata; and
        • an occupancy map indicating, for each pixel of the patched map, whether the pixel encodes a point of the three-dimensional point cloud;

    - encoding the per-patch metadata in the stream;
    - for each data of the first per-block metadata:

        • adding a binary flag in the stream indicating whether the block of the patched map indicated in said data belongs to a patch; and
        • if so, encoding in the stream, values of pixels of the occupancy map corresponding to said block;

    - generating a second per-block metadata by labeling pixels of the occupancy map with patch indices and annotating data of said second per-block data as ambiguous when the labeling proposes several patch indices for said data; and
    - for each ambiguous data, encoding the patch index comprised in the ambiguous data.

2. The method of claim 1 wherein the occupancy map has a lower resolution than the patched map and wherein a pixel of the occupancy map indicates if a MxM block of the patched map encodes points of the three-dimensional point cloud.

3. The method of claim 1 or 2 wherein at least one non-ambiguous data of the second per-block metadata is different from a corresponding data of the first per-block metadata and is annotated as erroneous data, the method further comprising, for each erroneous data:

    - adding the index of the block referenced by the erroneous data in the stream; and
    - encoding the patch index comprised in the erroneous data in the stream.

4. The method of one of claims 1 to 3, wherein, based on bounding boxes of patches as described in the per-patch metadata, a number of candidate patches is computed for each NxN block of the patched map and wherein the encoding of the data of the first per-block metadata is performed only for the blocks having at least one candidate patch.

5. A method of decoding, from a stream, metadata associated with a projection of a three-dimensional point cloud onto a patched map, the method comprising:

- decoding a per-patch metadata from the stream, a per-patch metadata comprising coordinates and size of each patch of the patched map;
- for each NxN block of the patched depth map:

• decoding from the stream a binary flag indicating whether the block of the patched map indicated in said data belongs to a patch; and
• if so, decoding from the stream, values of pixels of an occupancy map corresponding to said block; an occupancy map indicating, for each pixel of the patched map, whether the pixel encodes a point of the three-dimensional point cloud;

- generating a per-block metadata by labeling pixels of the occupancy map with patch indices and annotating data of said per-block data as ambiguous when the labeling proposes several patch indices for said data; and
- for each ambiguous data, decoding the patch index for the ambiguous data from the stream.

6. The method of claim 5 wherein the occupancy map has a lower resolution than the patched map and wherein a pixel of the occupancy map indicates if a MxM block of the patched map encodes points of the three-dimensional point cloud.

7. The method of claim 5 or 6, the method further comprising:

- obtaining from the stream a list of pair of indices comprising a block index and a patch index; and
- for each pair of said list, correcting the data of the per-block metadata associated with said block index with said patch index.

8. The method of one of claims 5 to 7, wherein, based on bounding boxes of patches as described in the per-patch metadata, a number of candidate patches is computed for each NxN block of the patched map and wherein the decoding of the data of the per-block metadata is performed only for the blocks having at least one candidate patch.

9. A device configured for encoding, in a stream, metadata associated with a projection of a three-dimensional point cloud onto a patched map, the device comprising a memory associated with a processor configured for:

- obtaining:

• a per-patch metadata comprising coordinates and size of each patch of the patched map;
• a first per-block metadata indicating, for each NxN block of the patched map, whether said block belongs to a patch and, if so, an index of said patch in the per-patch metadata; and
• an occupancy map indicating, for each pixel of the patched map, whether the pixel encodes a point of the three-dimensional point cloud;

- encoding the per-patch metadata in the stream;
- for each data of the first per-block metadata:

• adding a binary flag in the stream indicating whether the block of the patched map indicated in said data belongs to a patch; and
• if so, encoding in the stream, values of pixels of the occupancy map corresponding to said block;

- generating a second per-block metadata by labeling pixels of the occupancy map with patch indices and annotating data of said second per-block data as ambiguous when the labeling proposes several patch indices for said data; and
- for each ambiguous data, encoding the patch index comprised in the ambiguous data.

10. The device of claim 9, wherein at least one non-ambiguous data of the second per-block metadata is different from a corresponding data of the first per-block metadata and is annotated as erroneous data, the processor being further configured for, for each erroneous data:

- adding the index of the block referenced by the erroneous data in the stream; and
- encoding the patch index comprised in the erroneous data in the stream.

**11.** The device of claim 9 or 10, wherein, based on bounding boxes of patches as described in the per-patch metadata, the processor is configured for computing a number of candidate patches for each NxN block of the patched map and wherein the encoding of the data of the first per-block metadata is performed only for the blocks having at least one candidate patch.

**12.** A device configured for decoding, from a stream, metadata associated with a projection of a three-dimensional point cloud onto a patched map, the device comprising a memory associated with a processor configured for:

- decoding a per-patch metadata from the stream, a per-patch metadata comprising coordinates and size of each patch of the patched map;
- for each NxN block of the patched depth map:

  • decoding from the stream a binary flag indicating whether the block of the patched map indicated in said data belongs to a patch; and
  • if so, decoding from the stream, values of pixels of an occupancy map corresponding to said block; an occupancy map indicating, for each pixel of the patched map, whether the pixel encodes a point of the three-dimensional point cloud;

- generating a per-block metadata by labeling pixels of the occupancy map with patch indices and annotating data of said per-block data as ambiguous when the labeling proposes several patch indices for said data; and
- for each ambiguous data, decoding the patch index for the ambiguous data from the stream.

**13.** The device of claim 12 wherein the occupancy map has a lower resolution than the patched map and wherein a pixel of the occupancy map indicates if a MxM block of the patched map encodes points of the three-dimensional point cloud.

**14.** The device of claim 12 or 13, wherein the processor is further configured for:

- obtaining from the stream a list of pair of indices comprising a block index and a patch index; and
- for each pair of said list, correcting the data of the per-block metadata associated with said block index with said patch index.

**15.** The device of one of claims 12 to 14, wherein, based on bounding boxes of patches as described in the per-patch metadata, the processor is configured for computing a number of candidate patches for each NxN block of the patched map and wherein the decoding of the data of the per-block metadata is performed only for the blocks having at least one candidate patch.

**Figure 1**

**Figure 4**

**Figure 2**

**Figure 3**

50     ( Init )

51     | Encoding per-patch metadata |

52     For non empty blocks

       | Binary flag |

53     | Occupancy of the block |

54     | Labeling occupancy map |

55     | Encoding ambiguous blocks |

56     | Encoding erroneous blocks |

**Figure 5**

60 — Init

61 — decoding per-patch metadata

62 — For non empty blocks

Binary flag

63 — Occupancy of the block

64 — Labeling occupancy map

65 — Decoding ambiguous blocks

66 — Decoding erroneous blocks

**Figure 6**

| | Europäisches Patentamt European Patent Office Office européen des brevets | **EUROPEAN SEARCH REPORT** | **Application Number** EP 18 30 5441 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "PCC Test Model Category 2 v0", 120. MPEG MEETING;23-10-2017 - 27-10-2017; MACAU; (MOTION PICTURE EXPERT GROUP OR ISO/IEC JTC1/SC29/WG11),, no. N17248, 15 December 2017 (2017-12-15), XP030023909, * sections 1, 2, 3 and 4 * | 1-15 | INV. H04N19/597 G06T17/10 H04N19/70 H04N19/46 H04N19/90 H04N13/275 |
| A | MADHUKAR BUDAGAVI: "Occupancy map coding simplification in PCC TMC2", 121. MPEG MEETING; 22-1-2018 - 26-1-2018; GWANGJU; (MOTION PICTURE EXPERT GROUP OR ISO/IEC JTC1/SC29/WG11),, no. m42172, 17 January 2018 (2018-01-17), XP030070514, * the whole document * | 1-15 | |
| A | DEJUN ZHANG: "A new patch side information encoding method for PCC TMC2", 121. MPEG MEETING; 22-1-2018 - 26-1-2018; GWANGJU; (MOTION PICTURE EXPERT GROUP OR ISO/IEC JTC1/SC29/WG11),, no. m42195, 19 January 2018 (2018-01-19), XP030070537, * the whole document * | 1-15 | TECHNICAL FIELDS SEARCHED (IPC) H04N G06T |

The present search report has been drawn up for all claims

| Place of search | Date of completion of the search | Examiner |
|---|---|---|
| The Hague | 5 October 2018 | Ferré, Pierre |

EPO FORM 1503 03.82 (P04C01)